# EUROPÄISCHE PATENTSCHRIFT

(11) **EP 2 303 698 B1**
(45) Veröffentlichungstag und Bekanntmachung des Hinweises auf die Patenterteilung: **09.01.2013**
(21) Anmeldenummer: 09768989.7
(22) Anmeldetag: 24.06.2009
(51) Int. Cl.: B64F 1/36

(54) **ZUSATZKÜHLEINRICHTUNG ZUR VERBINDUNG MIT EINEM LUFTFAHRZEUGFLÜSSIGKEITSKÜHLSYSTEM**
AUXILIARY COOLING DEVICE FOR CONNECTION TO AN AIRCRAFT LIQUID COOLING SYSTEM
DISPOSITIF DE REFROIDISSEMENT SUPPLEMENTAIRE DESTINE A ETRE RELIE A UN SYSTEME DE REFROIDISSEMENT PAR LIQUIDE D'AERONEF

(30) Priorität: 26.06.2008 DE 102008030401; 26.06.2008 US 75819
(43) Veröffentlichungstag der Anmeldung: 06.04.2011
(73) Patentinhaber: Airbus Operations GmbH, 21129 Hamburg (DE); Airbus SAS, 31707 Blagnac Cedex (FR)
(72) Erfinder: SOENMEZ, Kenan, 22527 Hamburg (DE); LEROY, Luc, F-31400 Toulouse (FR)
(74) Vertreter: Schicker, Silvia
(86) Internationale Anmeldenummer: PCT/EP2009/004559
(87) Internationale Veröffentlichungsnummer: WO 2009/156140

(56) Entgegenhaltungen:
- WO-A1-2009/058628
- US-A1- 2006 201 173
- ITWMILITARYGSE: "Water Chilled / Electric Powered Test Stand Skid Unit" 18. Februar 2008 (2008-02-18), XP002565420 Gefunden im Internet: URL:http://www.itwmilitarygse.com/images/d atasht_pdfs/PAOskid_2_18_08.pdf> [gefunden am 2010-01-18]
- GlobalSecurity.org: "F-22 Raptor Flight Critical Systems" 21. Januar 2008 (2008-01-21), XP002565421 Gefunden im Internet: URL:http://www.globalsecurity.org/military /systems/aircraft/f-22-fcas.htm> [gefunden am 2010-01-27]
- TLD GSE: "TLD Military Products" XP002565422 Gefunden im Internet: URL:http://www.tld-gse.com/products/brochu re/MILITARY_PRODUCTS_SHEET_08.pdf> [gefunden am 2010-01-18]

## Beschreibung

Die Erfindung betrifft eine externe Zusatzkühleinrichtung zum Kühlen von Bauteilen und/oder von Kabinenbereichen eines Luftfahrzeugs am Boden und ein Flüssigkeitskühlsystem in einem Luftfahrzeug, das mit der externen Zusatzkühleinrichtung zusammenarbeitet.

In Flugzeugen werden zunehmend zentrale Flüssigkeitskühlsysteme eingesetzt. Ein typisches Flüssigkeitskühlsystem weist eine Kältemaschine auf, die kaltes flüssiges Kühlmittel abgibt. Das flüssige Kühlmittel wird mittels eines Leitungsnetzes zu einer oder mehreren Wärmelast(en) im Flugzeug geleitet. Es können mehrere Wärmelasten in Reihenschaltung und/oder in Parallelschaltung mit flüssigem Kühlmittel versorgt werden. Nachdem das flüssige Kühlmittel die Wärmelast(en) gekühlt hat, wird es zur Kältemaschine zurückgeführt, so dass es ständig in einem geschlossenen Kreislauf zirkuliert. Flüssigkeitskühlsysteme haben den Vorteil, dass die Rohrleitungen zum Transportieren des flüssigen Kühlmittels wesentlich dünner ausgeführt werden können als bei einem Kühlsystem, das ein gasförmiges Fluid, beispielsweise Luft, als Kühlmittel verwendet, da ein flüssiges Kühlmittel wesentlich mehr Wärme aufnehmen kann als ein gasförmiges Kühlmittel. Die dünneren Leitungen haben den Vorteil, dass sie leichter in einem Flugzeug verlegt werden können und mehr Platz für andere Bauteile des Flugzeuges vorhanden ist. Ferner können mit einem flüssigen Kühlmittel größere Entfernungen zwischen der Kältemaschine und der Wärmelast überbrückt werden. Das flüssige Kühlmittel kann beispielsweise Wasser, ein Gemisch aus Wasser und Glykol oder eine Kälteträgerflüssigkeit auf der Basis von Fluorkohlenwassenstoffen sein. Das flüssige Kühlmittel kann eine Temperatur zwischen etwa -9°C und etwa 10°C oder etwa 1°C und etwa 10°C aufweisen. Es ist auch denkbar, dass das Kühlmittel eine niedrigere oder höhere Temperatur aufweist.

Das Flüssigkeitskühlsystem kann einen Speisewagen sowie Speisen und Getränke in der Galley kühlen. Hierfür sind Flüssigkeits-Gas-Wärmetauscher vorgesehen. Das flüssige Kühlmittel tritt in den Flüssigkeits-Gas-Wärmetauscher ein und kühlt Luft, die mittels eines Ventilators in den Speisewagen sowie auf die Speisen und Getränke in der Galley gerichtet wird. Es ist auch möglich, die Flugsteuerungscomputer (avionics bay) oder die Unterhaltungssysteme (IFE: in-flight entertainment) mit flüssigem Kühlmittel zu kühlen. Das Flüssigkeitskühlsystem kann auch dazu verwendet werden, Kabinenbereiche, beispielsweise Suiten der ersten Klasse oder die Umgebung eines Sitzes der Businessklasse, individuell zu kühlen. Die Kältemaschine kann eine Kompressionskältemaschine sein, die innerhalb der Druckkabine angeordnet ist. Dies hat den Nachteil, dass die Abwärme der Kompressionskältemaschine zusätzlich die Klimaanlage der Kabine belastet, da die Klimaanlage eine zusätzliche Wärmelast in der Druckkabine kühlen muss. Es ist auch möglich, die Kältemaschine als eine Kompressionskältemaschine auszuführen, die außerhalb des mit Druck beaufschlagten Flugzeugrumpfes angeordnet ist. Die Abwärme der Kältemaschine wird in diesem Fall an die Umgebung abgegeben.

Es versteht sich, dass ein derartiges Flüssigkeitskühlsystem für den ungünstigsten Lastfall ausgelegt werden muss. Einer der ungünstigsten Lastfälle ist eine hohe Umgebungstemperatur, wenn sich das Flugzeug am Boden befindet. In diesem Fall muss eine außerhalb des mit Druck beaufschlagten Flugzeugrumpfes angeordnete Kompressionskältemaschine erheblich mehr Kühlleistung bereitstellen als bei einem Flug in großer Höhe, bei der eine niedrigere Außentemperatur herrscht. Um die am Boden erforderliche Kühlleistung aufzubringen, müssen ein Verdichter, ein Verdampfer und ein Kondensator der Kompressionskältemaschine leistungsstark ausgelegt werden. Dies geht jedoch mit einem erhöhten Gewicht einher. Das bedeutet, dass das Flugzeug zusätzliches Gewicht in Form des leistungsstarken Verdichters, Verdampfers und Kondensators während des Fluges mit sich führen muss, um am Boden die erforderliche Kühlleistung bereitzustellen. Während des Fluges ist diese leistungsstarke Auslegung der Komponenten nicht erforderlich. Das zusätzliche Gewicht aufgrund der leistungsstarken Auslegung verursacht einen höheren Kraftstoffverbrauch und reduziert die mögliche Nutzlast. Ferner ist diese Kompressionskältemaschine schwieriger in ein Flugzeug einzubauen, da der leistungsstarke Verdichter, Verdampfer und Kondensator zusätzlichen Einbauraum benötigen.

Der Erfindung liegt die Aufgabe zugrunde, das Gewicht eines Flüssigkeitskühlsystems für ein Luftfahrzeug zu reduzieren.

Zur Lösung dieser Aufgabe stellt die Erfindung eine Zusatzkühleinrichtung bereit, die dazu ausgebildet ist, außerhalb eines Luftfahrzeugs betrieben zu werden.

Eine Zusatzkühleinrichtung mit allen Merkmalen des Oberbegriffs des Anspruchs 1 ist mit dem Namen "Water Chilled / Electric Powered Test Stand Skid Unit" von der Firma ITW Military GSE bekannt und wird als nächstliegender Stand der Technik angesehen.

Die Zusatzkühleinrichtung gemäß Anspruch 1 umfasst eine Kältequelle, die dazu eingerichtet ist, ein Kühlmittel auf eine gewünschte tiefe Temperatur abzukühlen. Das von der Kältequelle der Zusatzkühleinrichtung gekühlte Kühlmittel kann ein flüssiges Kühlmittel sein. Ferner umfasst die Zusatzkühleinrichtung einen mit der Kältequelle verbundenen Zusatzkühleinrichtungsauslass, der mit einem Kühlmittelzuführanschluss eines Luftfahrzeugflüssigkeitskühlsystems verbindbar ist, um von der Kältequelle auf eine gewünschte tiefe Temperatur abgekühltes Kühlmittel an das Luftfahrzeugflüssigkeitskühlsystem abzugeben, und einen mit der Kältequelle verbundenen Zusatzkühleinrichtungseinlass, der mit einem Kühlmittelabgabeanschluss des Luftfahrzeugflüssigkeitskühlsystems verbindbar ist, um durch Wärmeaufnahme von einer Wärmelast in dem Luftfahrzeug erwärmtes Kühlmittel aufzunehmen.

Die Zusatzkühleinrichtung bringt die Kühlleistung auf, die für einen Betrieb von zu kühlenden Einrichtungen eines Luftfahrzeugs am Boden erforderlich ist. Die Leistung und die Anschlüsse der Zusatzkühleinrichtung können je nach Systemspezifikation und Systemarchitektur angepasst werden. Eine zu kühlende Einrichtung kann beispielsweise ein Speisewagen, ein Speisebehälter, ein Getränkebehälter, ein Flugsteuerungscomputer, ein Unterhaltungssystem und/oder ein individuell klimatisierter Kabinenbereich des Luftfahrzeugs sein. Die erfindungsgemäße Zusatzkühleinrichtung ermöglicht, dass ein Flüssigkeitskühlsystem des Luftfahrzeugs weniger leistungsstark ausgelegt werden kann, was mit einer Gewichtsreduzierung einhergeht.

Die Zusatzkühleinrichtung umfasst eine Zusatzkühleinrichtungsschnittstelle die dazu gerichtet ist, ein Signal von einer Steuereinrichtung des Luftfahrzeugflüssigkeitskühlsystems zu empfangen, das einen Kühlmittelbedarf und/oder eine Solltemperatur des an das Luftfahrzeugflüssigkeitskühlsystem abzugebenden Kühlmittels anzeigt. Ferner kann die Zusatzkühleinrichtung dazu eingerichtet sein, mittels der Kältequelle auf eine gewünschte tiefe Temperatur abgekühltes Kühlmittel am Zusatzkühleinrichtungauslass entsprechend dem von der Zusatzkühleinrichtungsschnittstelle erhaltenen Signal an das Luftfahrzeugflüssigkeitskühlsystem abzugeben. Der Betrieb der Zusatzkühleinrichtung kann vollständig von der Steuereinrichtung des Luftfahrzeugflüssigkeitskühlsystems gesteuert werden. Alternativ dazu ist es jedoch auch möglich, die von der Steuereinrichtung des Luftfahrzeugflüssigkeitskühlsystems bereitgestellten Signale einer Steuereinrichtung der Zusatzkühleinrichtung zuzuführen, die dann die einzelnen Komponenten der Zusatzkühleinrichtung, wie z.B. die Kältequelle, eine Pumpe, entsprechende Ventile oder dgl. in Abhängigkeit der Signale der Steuereinrichtung des Luftfahrzeugflüssigkeitskühlsystems steuert.

Die Zusatzkühleinrichtung kann Räder aufweisen, damit sie im Einsatz zu dem mit Kühlenergie zu versorgenden Luftfahrzeug bewegt werden kann. Es ist jedoch auch möglich, die Zusatzkühleinrichtung stationär in einem Flughafenbereich einzubauen und entsprechend lange Leitungen vorzusehen sind, um das Kühlmittel zu dem Luftfahrzeug zu leiten und von diesem wieder abzuführen.

Die Zusatzkühleinrichtung kann eine Filtereinrichtung zum Filtern des flüssigen Kühlmittels aufweisen. Damit wird sichergestellt, dass das flüssige Kühlmittel im Kühlkreislauf des Luftfahrzeugflüssigkeitskühlsystems immer eine entsprechend hohe Qualität aufweist. Die Zusatzkühleinrichtung kann das über den Zusatzkühleinrichtungseinlass erhaltene flüssige Kühlmittel nach dem Kühlen am Zusatzkühleinrichtungsauslass abgeben. Damit wird sichergestellt, dass das von der Zusatzkühleinrichtung bereitgestellte flüssige Kühlmittel ständig in einem geschlossenen Kreislauf strömt. Wenn das Flüssigkeitskühlsystem des Luftfahrzeugs ein Reservoir aufweist, kann die Zusatzkühleinrichtung dazu ausgebildet sein, dieses Reservoir des Flüssigkeitskühlsystems des Luftfahrzeugs aufzufüllen. Dazu muss ein entsprechend großes Reservoir in der Zusatzkühleinrichtung vorhanden sein.

Die Zusatzkühleinrichtung kann einen Dieselmotor, vorzugsweise mit einem integrierten Generator umfassen. Alternativ dazu kann die Zusatzkühleinrichtung auch elektrisch betreibbar sein. Ferner kann die Zusatzkühleinrichtung dazu eingerichtet sein, das Luftfährzeugflüssigkeitskühlsystem mit Kühlmittel zu befüllen und/oder Kühlmittel aus dem Luftfahrzeugflüssigkeitskühlsystem abzulassen.

Die Erfindung betrifft auch ein Luftfahrzeugflüssigkeitskühlsystem mit einer Kälteerzeugungseinrichtung, die dazu ausgebildet ist, ein in einem Kühlkreislauf eines Luftfahrzeugs im Kreislauf geführtes flüssiges Kühlmittel auf eine gewünschte tiefe Temperatur abzukühlen. Ein Kühlmittelzuführanschluss des Luftfahrzeugflüssigkeitskühlsystems ist mit einem Zusatzkühleinrichtungsauslass einer erfindungsgemäßen Zusatzkühleinrichtung verbindbar, um von einer Kältequelle der Zusatzkühleinrichtung auf eine gewünschte tiefe Temperatur abgekühltes Kühlmittel aufzunehmen. Ein Kühlmittelabgabeanschluss des Luftfahrzeugflüssigkeitskühlsystems ist dagegen mit einem Zusatzkühleinrichtungseinlass der Zusatzkühleinrichtung verbindbar, um durch Wärmeaufnahme von einer Wärmelast in dem Luftfahrzeug erwärmtes Kühlmittel an die Zusatzkühleinrichtung abzugeben.

Die Kälteerzeugungseinrichtung des erfindungsgemäßen Luftfahrzeugflüssigkeitskühlsystems kann lediglich für die während des Fluges erforderliche Leistung ausgelegt werden. Am Boden kann das erfindungsgemäße Luftfahrzeugflüssigkeitskühlsystem dagegen von der erfindungsgemäßen Zusatzkühleinrichtung mit auf eine gewünschte tiefe Temperatur abgekühltem Kühlmittel versorgt werden. Da die Kälteerzeugungseinrichtung des erfindungsgemäßen Luftfahrzeugflüssigkeitskühlsystems mit weniger leistungsstarken Bauteilen, beispielsweise einem weniger leistungsstarken Verdichter, Kondensator und Verdampfer, ausgelegt werden kann, weist das gesamte Luftfahrzeugflüssigkeitskühlsystem ein niedrigeres Gewicht auf, was den Kraftstoffverbrauch des Luftfahrzeugs reduziert und die Nutzlast des Luftfahrzeugs erhöht. Da die weniger leistungsstark ausgelegten Bauteile der Kälteerzeugungseinrichtung einen niedrigeren Platzbedarf aufweisen, wird ferner die Integration des Luftfahrzeugflüssigkeitskühlsystem in das Luftfahrzeug vereinfacht und es steht zusätzlicher Einbauraum für andere Komponenten des Luftfahrzeugs zur Verfügung.

Wie zuvor erwähnt wurde, kann die zumindest eine Wärmelast ein Speisewagen in der Galley, ein Speise- oder Getränkebereich in der Galley, ein Flugsteuerungscomputer, ein Unterhaltungssystem und/oder ein individuell klimatisierter Kabinenbereich sein. Das Luftfahrzeugflüssigkeitskühlsystem kann auch eine Klimaanlage des Luftfahrzeugs unterstützen. Die zuvor genannte Wärmelast wird während des Fluges lediglich durch die Kälteerzeugungseinrichtung des Luftfahrzeugflüssigkeitskühlsystem mit kaltem Kühlmittel versorgt. Befindet sich das Luftfahrzeug am Boden, kann die Wärmelast von der Zusatzkühleinrichtung und, falls erwünscht, auch von der Kälteerzeugungseinrichtung des Luftfahrzeugflüssigkeitskühlsystems mit kaltem Kühlmittel versorgt werden.

Das Luftfahrzeugflüssigkeitskühlsystem kann ferner eine Steuereinrichtung umfassen, die dazu gerichtet ist, über eine Luftfahrzeugkühlsystemschnittstelle ein Signal an die Zusatzkühleinrichtungsschnittstelle der Zusatzkühleinrichtung zu senden, das einen Kühlmittelbedarf und/oder eine Solltemperatur des an das Luftfahrzeugflüssigkeitskühlsystem abzugebenden Kühlmittels anzeigt. Die Steuereinrichtung des Luftfahrzeugflüssigkeitskühlsystems kann dazu eingerichtet sein, den gesamten Betrieb der Zusatzkühleinrichtung zu steuern. Alternativ dazu kann die Steuereinrichtung des Luftfahrzeugflüssigkeitskühlsystems ihre Signale über die Zusatzkühleinrichtungsschnittstelle der Zusatzkühleinrichtung aber auch einer separaten Steuereinrichtung der Zusatzkühleinrichtung zuführen, die dann ihrerseits den Betrieb der einzelnen Komponenten der Zusatzkühleinrichtung steuert. Die Luftfahrzeugkühlsystemschnittstelle und Zusatzkühleinrichtungsschnittstelle können beliebige drahtgebundene oder drahtlose Schnittstellen sein.

Das Luftfahrzeugflüssigkeitskühlsystem umfasst vorzugsweise eine mit dem Kühlmittelzuführanschluss verbundene Kühlmittelzuführleitung, sowie eine mit dem Kühlmittelabgabeanschluss verbundene Kühlmittelabgabeleitung. In der Kühlmittelzuführleitung kann ein Kühlmittelzuführanschlussventil angeordnet sein. In ähnlicher Weise kann in der Kühlmittelabgabeleitung ein Kühlmittelabgabeanschlussventil angeordnet sein. Durch diese Anordnung wird sichergestellt, dass das Luftfahrzeugflüssigkeitskühlsystem kein Kühlmittel verliert, wenn keine Zusatzkühleinrichtung angeschlossen ist und das Kühlmittelzuführanschlussventil und das Kühlmittelabgabeanschlussventil geschlossen sind. Es versteht sich, dass das Kühlmittelzuführanschlussventil und das Kühlmittelabgabeanschlussventil geöffnet sein müssen, wenn dem Luftfahrzeugflüssigkeitskühlsystem Kühlmittel von der Zusatzkühleinrichtung zugeführt wird.

Die Kühlmittelzuführleitung und die Kühlmittelabgabeleitung können in den mit der Kälteerzeugungseinrichtung verbundenen Kühlkreislauf des Luftfahrzeugflüssigkeitskühlsystems münden. In dem Kühlkreislauf ist zwischen einer Mündungsstelle der Kühlmittelzuführleitung und einer Mündungsstelle der Kühlmittelabgabeleitung vorzugsweise ein erstes Ventil angeordnet. Wenn das erste Ventil geöffnet ist, wird Kühlmittel im Kühlkreislauf des Luftfahrzeugflüssigkeitskühlsystems im Kreislauf geführt. Ist das erste Ventil dagegen geschlossen, strömt Kühlmittel von der Zusatzkühleinrichtung über den Kühlmittelzuführanschluss in den Kühlkreislauf des Luftfahrzeugflüssigkeitskühlsystems. Kühlmittel aus dem Kühlkreislauf des Luftfährzeugflüssigkeitskühlsystems strömt dagegen zum Kühlmittelabgabeanschluss und wird in die Zusatzkühleinrichtung abgeführt. Voraussetzung hierfür ist natürlich, dass das Kühlmittelzuführanschlussventil und das Kühlmittelabgabeanschlussventil geöffnet sind.

Das erste Ventil kann als Kugelventil, als Rücklaufventil oder als elektrisches Stellventil ausgebildet oder in eine in dem Kühlkreislauf angeordnete Pumpe integriert sein.

Das Luftfährzeugflüssigkeitskühlsystem kann ferner ein stromaufwärts der Kälteerzeugungseinrichtung in dem Kühlkreislauf des Luftfahrzeugflüssigkeitskühlsystems angeordnetes zweites Ventil sowie eine die Kälteerzeugungseinrichtung umgehende Bypassleitung umfassen. In Abhängigkeit der Stellung des zweiten Ventils kann den Kühlkreislauf des Luftfahrzeugflüssigkeitskühlsystems durchströmendes Kühlmittel entweder durch die Kälteerzeugungseinrichtung geleitet oder an der Kälteerzeugungseinrichtung vorbeigeführt werden.

Das Luftfahrzeugflüssigkeitskühlsystem kann mit einem Wärmetauscher versehen sein. Der Wärmetauscher umfasst vorzugsweise eine erste Fluidleitung sowie eine thermisch mit der ersten Fluidleitung gekoppelte zweite Fluidleitung, wobei die erste Fluidleitung fluidleitend mit dem Kühlkreislauf des Luftfahrzeugflüssigkeitskühlsystems verbunden ist und die zweite Fluidleitung mit dem Kühlmittelzuführanschluss sowie dem Kühlmittelabgabeanschluss des Luftfahrzeugflüssigkeitskühlsystems verbunden ist. Diese Ausführungsform hat den Vorteil, dass das flüssige Kühlmittel des Luftfahrzeugs und das Kühlmittel der Zusatzkühleinrichtung nicht miteinander vermischt werden. Dadurch kann eine konstant hohe Qualität des flüssigen Kühlmittels des Luftfahrzeugs gewährleistet werden. Ferner kann für den Kühlmittelkreislauf des Luftfahrzeugs ein anderes Kühlmittel als bei der Zusatzkühleinrichtung verwendet werden. Somit kann für jeden Luftfahrzeugtyp in dem Luftfahrzeugflüssigkeitskühlsystem ein speziell angepasstes flüssiges Kühlmittel und für die Zusatzkühleinrichtung sogar ein gasförmiges oder ein zweiphasiges Kühlmittel verwendet werden.

Die Steuereinrichtung des Luftfahrzeugflüssigkeitskühlsystems kann dazu eingerichtet sein, die Kälteerzeugungseinrichtung, das erste Ventil, das Kühlmittelzuführanschlussventil und/oder das Kühlmittelabgabeanschlussventil zu steuern. Befindet sich das Luftfahrzeug am Boden und ist die Zusatzkühleinrichtung an das Luftfahrzeug angeschlossen, kann die Steuereinrichtung das Kühlmittelzuführanschlussventil und das Kühlmittelabgabeanschlussventil öffnen. Zusätzlich kann das erste Ventil geschlossen werden. Somit wird dem Luftfahrzeugflüssigkeitskühlsystem über den Kühlmlttelzufuhranschluss flüssiges Kühlmittel zugeführt, das über den Kühlmittelabgabeanschluss abgegeben wird. Die Steuereinrichtung kann ferner das zweite Ventil so schalten, dass das Kühlmittel über die Bypassleitung an der Kälteerzeugungseinrichtung vorbeigeleitet wird. In diesem Fall kann die Kälteerzeugungseinrichtung vollständig ausgeschaltet werden. Das über den Kühlmittelzuführanschluss zugeführte Kühlmittel kann auch durch die Kälteerzeugungseinrichtung geleitet werden, falls das zweite Ventil entsprechend geschaltet ist oder kein zweites Ventil vorhanden ist. In diesem Fall kann die Steuereinrichtung die Kälteerzeugungseinrichtung jedoch trotzdem ausschalten, so dass lediglich die Zusatzkühleinrichtung den Kühlkreislauf des Luftfahrzeugs mit flüssigem Kühlmittel versorgt. Alternativ dazu kann die Steuereinrichtung die Kälteerzeugungseinrichtung jedoch auch einschalten oder eingeschaltet lassen, damit diese zusätzliche Kühlleistung liefert.

Das Luftfahrzeugflüssigkeitskühlsystem kann ein Reservoir zur Aufnahme von flüssigem Kühlmittel aufweisen. Die Steuereinrichtung des Luftfahrzeugflüssigkeitskühlsystems kann ferner dazu ausgebildet sein, zu bewirken, dass vom Kühlmittelzuführanschluss zugeführtes Kühlmittel in das Reservoir geleitet wird. Hierfür kann ein Reservoirventil vorgesehen sein, das das vom Kühlmittelzuführanschluss zugeführte Kühlmittel in das Reservoir leitet. Das Reservoireinlassventil kann sich an einer beliebigen Stelle im Kühlkreislauf befinden. Es versteht sich, dass das Reservoir auch ein Reservoirauslassventil aufweisen kann, mit dem dem Kühlkreislauf im Fall einer Leckage zusätzliches Kühlmittel zugeführt werden kann. Mit dem Reservoir kann auch eine Wärmeausdehnung des flüssigen Kühlmittels bei einer Temperaturänderung, beispielsweise falls das Flugzeug außer Betrieb ist, kompensiert werden.

Die Steuereinrichtung des Luftfahrzeugflüssigkeitskühlsystems kann schließlich dazu eingerichtet sein, in einem speziellen Modus die Kommunikation zwischen dem Luftfahrzeugflüssigkeitskühlsystem und der Zusatzkühleinrichtung zu steuern.

Die Erfindung betrifft auch ein Verfahren gemäß Anspruch 13 zum Kühlen zumindest einer Wärmelast an Bord eines Luftfahrzeugs, bei dem eine oben beschriebene Zusatzkühleinrichtung mit einem oben beschriebenen Luftfahrzeugflüssigkeitskühlsystem verbunden wird und dem Luftfahrzeugflüssigkeitskühlsystem mittels der Zusatzkühleinrichtung gekühltes Kühlmittel zugeführt wird.

Die Zusatzkühleinrichtung kann im Bodenbetrieb des Luftfahrzeugs, nach einem Flug und/oder vor einem Flug mit dem Luftfahrzeugflüssigkeitskühlsystem verbunden werden und dem Luftfahrzeugflüsslgkeitskühlsystem gekühltes Kühlmittel zuführen. Während des Taxing, des Abhebens, des Steigflugs, des Reiseflugs, des Anflugs und des Landens kann die Wärmelast dagegen von dem Luftfahrzeugflüssigkeitskühlsystem gekühlt werden. Die Zusatzkühleinrichtung kann zur Unterstützung einer Flugzeugklimaanlage verwendet werden und mit dem Luftfahrzeugflüssigkeitskühlsystem verbunden werden, um dem Luftfahrzeugflüssigkeitskühlsystem zur Unterstützung der Flugzeugklimaanlage gekühltes Kühlmittel zuzuführen.

In die Zusatzkühleinrichtung und/oder ind das Luftfahrzeugflüssigkeitskühlsystem integrierte Leitungen und/oder Verbindungsleitungen zwischen der Zusatzkühleinrichtung und dem Luftfahrzeugflüssigkeitskühlsystem werden vorzusweise entlüftet, um einen ordnungsgemäßen Betrieb des Gesamtsystems zu gewährleisten.

Die Erfindung wird im Folgenden anhand der beigefügten schematischen Zeichnungen näher erläutert, von denen:
- Fig. 1: eine erste Ausführungsform eines Luftfahrzeugflüssigkeitskühlsystems und einer Zusatzkühleinrichtung in einem ersten Betriebszustand zeigt,
- Fig. 2: das Luftfahrzeugflüssigkeitskühlsystems und die Zusatzkühleinrichtung gemäß Fig.1 in einem zweiten Betriebszustand zeigt und
- Fig.3: eine weitere Ausführungsform eines Luftfahrzeugflüssigkeitskühlsystems und einer Zusatzkühleinrichtung zeigt.

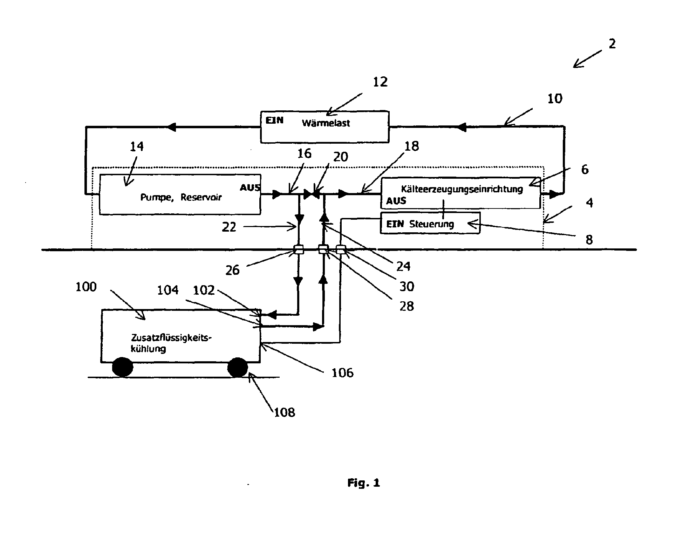

Figur 1 zeigt ein Luftfahrzeugflüssigkeitskühlsystem 4 in einem Luftfahrzeug 2 und eine Zusatzkühleinrichtung 100. Das Luftfahrzeugflüssigkeitskühlsystem 4 weist eine Kälteerzeugungseinrichtung 6, eine Steuereinrichtung 8, eine Pumpe und ein Reservoir 14, eine erste Leitung 18, eine zweite Leitung 16 und ein erstes Ventil 20 auf. Während des Fluges kühlt die Kälteerzeugungseinrichtung 6 flüssiges Kühlmittel, das an eine Leitung 10 abgegeben wird. Das flüssige Kühlmittel kühlt eine Wärmelast 12. Die Pumpe 14 fördert das Kühlmittel durch den Kühlkreislauf. Das Reservoir 14 stellt im Falle einer Leckage zusätzliches Kühlmittel bereit. Da das erste Ventil 20 zwischen der ersten Leitung 18 und der zweiten Leitung 16 während des Fluges geöffnet ist, zirkuliert das flüssige Kühlmittel im Kühlkreislauf.

Die Wärmelast 12 kann ein Speisenwagen in der Galley, ein Speisen- oder Getränkebereich in der Galley, ein Flugsteuerungscomputer, ein Unterhaltungssystem und/oder ein individuell klimatisierter Bereich einer Kabine sein. Der individuell klimatisierte Bereich einer Kabine kann eine Suite der ersten Klasse und/oder eine Umgebung eines Luftfahrzeugsitzes sein.

Um das Gewicht des Luftfahrzeugflüssigkeitskühlsystems 4 möglichst niedrig zu halten, ist die Kälteerzeugungseinrichtung 6 so ausgelegt, dass sie lediglich während des Fluges ausreichend Kühlenergie zur Kühlung der Wärmelast 12 bereitstellt. Die Kälteerzeugungseinrichtung 6 kann nach einem konventionellen Kreislaufprozess aus Verdichtung, Kondensation und Verdampfung arbeiten. Die Kälteerzeugungseinrichtung 6 kann sich außerhalb des mit Druck beaufschlagten Bereichs des Flugzeugrumpfes befinden. Somit ist der Kondensator der Kälteerzeugungseinrichtung 6 im Wesentlichen der Außentemperatur ausgesetzt. Da die Außentemperatur am Boden, verglichen mit der Temperatur während eines Fluges in hoher Höhe, relativ hohe Werte einnehmen kann, reicht die Leistung der Kälteerzeugungseinrichtung 6 nicht aus, um die Wärmelast 12 am Boden mit ausreichend Kühlenergie zu versorgen. Ferner kann die Wärmelast 12 am Boden einen erhöhten Kühlbedarf haben, beispielsweise wenn die Wärmelast ein individuell klimatisierter Bereich einer Luftfahrzeugkabine ist.

Das Luftfahrzeugflüssigkeitskühlsystem 4 umfasst ferner einen Kühlmittelabgabeanschluss 26, eine Kühlmittelabgabeleitung 22, einen Kühlmittelzuführanschluss 28 und eine Kühlmittelzuführleitung 24. Ein Kühlmittelabgabeanschlussventil (nicht gezeigt) und ein Kühlmittelzuführanschlussventil (nicht gezeigt) sind in die Zusatzkühleinrichtung 100 integriert. Ferner weist das Luftfahrzeugflüssigkeitskühlsystem 4 eine Luftfahrzeugkühlsystemschnittstelle 30 auf, die mit der Steuereinrichtung 8 verbunden ist. Die Steuereinrichtung 8 steuert die Funktion der Kälteerzeugungseinrichtung 6, der Pumpe 14, des Reservoirs 14, des ersten Ventils 20, des Kühlmittelzuführanschlussventils und des Kühlmlttelabgabeanschlussventils.

Eine Zusatzkühleinrichtung 100 weist einen Zusatzkühleinrichtungseinlass 102 zum Aufnehmen von Kühlmittel vom Luftfahrzeug und einen Zusatzkühleinrichtungsauslass 104 zum Abgeben von Kühlmittel an das Luftfahrzeug 2 auf. Ferner weist die Zusatzkühleinrichtung 100 eine Zusatzkühleinrichtungsschnittstelle 106 auf. Die Zusatzkühleinrichtung 100 umfasst eine Kältequelle (nicht gezeigt). Die Kältequelle kann nach einem konventionellen Kreislaufprozess aus Verdichtung, Kondensation und Verdampfung arbeiten. Es ist jedoch auch denkbar, dass die Kältequelle durch ein Absorptionskühlsystem oder ein Adsorptionskühlsystem gebildet wird. Die Zusatzkühleinrichtung 100 empfängt über die Zusatzkühleinrichtungsschnittstelle 106 Signale von der Steuereinrichtung 8 des Luftfahrzeugs 2, die einen Bedarf an flüssigem Kühlmittel und/oder eine Temperatur des abzugebenden flüssigen Kühlmittels anzeigen. Die Zusatzkühleinrichtung 100, d.h. die Kältequelle der Zusatzkühleinrichtung 100 sowie weitere Komponenten der Zusatzkühleinrichtung 100, wie z.B. eine Pumpe oder dgl., wird/werden in Abhängigkeit dieser Signale so gesteuert, dass kaltes flüssiges Kühlmittel am Zusatzkühleinrichtungsauslass 104 mit einer Menge und/oder einer Temperatur abgegeben wird, die den von der Zusatzkühleinrichtungsschnittstelle 106 empfangenen Signalen entspricht.

Die Zusatzkühleinrichtung 100 ist mit Rädern 108 versehen, damit die Zusatzkühleinrichtung 100 zu einem mit Kühlenergie zu versorgenden Luftfahrzeug 2 bewegt werden kann. Alternativ dazu ist es jedoch auch möglich, die Zusatzkühlelnrichtung stationär, beispielsweise in einem Flughafengebäude, unterzubringen und entsprechend lange Leitungen zu einer Parkposition eines Luftfahrzeugs 2 vorzusehen.

Die Zusatzkühleinrichtung 100 gibt das am Zusatzkühleinrichtungseinlass erhaltene Kühlmittel nach dem Kühlen auf eine gewünschte tiefe Temperatur am Zusatzkühleinrichtungsauslass 104 ab. Ferner umfasst die Zusatzkühleinrichtung 100 eine Filtereinrichtung zum Filtern des flüssigen Kühlmittels. Durch Filtern des flüssigen Kühlmittels kann das Kühlmittel im Luftfahrzeug 2 bei einer relativ hohen Qualität gehalten werden.

Um die Wärmelast 12 im Bodenbetrieb des Luftfahrzeugs 2 ausreichend zu kühlen, wird die Zusatzkühleinrichtung 100 an das Luftfahrzeugflüssigkeitskühlsystem 4 des Luftfahrzeugs 2 angeschlossen. Hierzu wird der Zusatzkühleinrichtungsauslass 104 der Zusatzkühleinrichtung 100 mit dem Kühlmittelzuführanschluss 28 des Luftfahrzeugflüssigkeitskühlsystems 4 des Luftfahrzeugs 2 verbunden. Ferner wird der Zusatzkühleinrichtungseinlass 102 mit dem Kühlmittelabgabeanschluss 26 des Luftfahrzeugflüssigkeitskühlsystems 4 des Luftfahrzeugs 2 verbunden. Schließlich wird die Zusatzkühleinrichtungsschnittstelle 106 mit der Luftfahrzeugkühlsystemschnittstelle 30 verbunden. Vorzugsweise befinden sich der Kühlmittelzuführanschluss 28 und der Kühlmittelabgabeanschluss 26 des Luftfahrzeugflüssigkeitskühlsystems 4 am oder in der Nähe des sogenannten Wartungspaneels (Ground Service Panel) des Luftfahrzeugs 2. Zum Anschließen einer Leitung an den Kühlmittelzuführanschluss 28 bzw. an den Kühlmittelabgabeanschluss 26 werden vorzugsweise selbstschließende Schnellkupplungen verwendet.

Bei der in Figur 1 gezeigten Ausführungsform schaltet die Steuereinrichtung 8 die Kälteerzeugungseinrichtung 6 des Luftfahrzeugflüssigkeitskühlsystems 4 aus, schließt das erste Ventil 20, öffnet das Kühlmittelabgabeanschlussventil und öffnet das Kühlmittelzuführanschlussventil, falls eine externe Kühlung erwünscht oder erforderlich ist. Folglich kann flüssiges Kühlmittel vom Zusatzkühleinrichtungsauslass 104 der Zusatzkühleinrichtung 100 zum Kühlmittelzuführanschluss 28 des Luftfahrzeugflüssigkeitskühlsystems 4 des Luftfahrzeugs 2 strömen. Das Kühlmittel strömt durch die ausgeschaltete Kälteerzeugungseinrichtung 6 und über die Leitung 10 zur Wärmelast 12. Von der Wärmelast 12 strömt das Kühlmittel durch die ausgeschaltet Pumpe 14 des Luftfahrzeugflüssigkeitskühlsystems 4 zum Kühlmittelabgabeanschluss 26. Anschließend strömt das Kühlmittel über den Zusatzkühleinrichtungseinlass 102 zurück in die Zusatzkühleinrichtung 100.

In der Zusatzkühleinrichtung 100 wird das flüssige Kühlmittel mittels der Kältequelle gekühlt, bevor es über den Zusatzkühleinrichtungsauslass 104 abgegeben wird. Die Steuereinrichtung 8 kann über die Luftfahrzeugkühlsystemschnittstelle 30 und die Zusatzkühleinrichtungsschnittstelle 106 einen Bedarf an flüssigem Kühlmittel und/oder eine Temperatur des abzugebenden flüssigen Kühlmittels mittels eines entsprechenden Signals anzeigen. Das Signal kann ein binäres Signal sein, das lediglich die Kältequelle der Zusatzkühleinrichtung 100 einschaltet und somit anzeigt, dass ein Bedarf an flüssigem Kühlmittel besteht. Die Steuereinrichtung 8 kann aber auch eine Strömungsrate und/oder eine Temperatur des flüssigen Kühlmittels vorgeben.

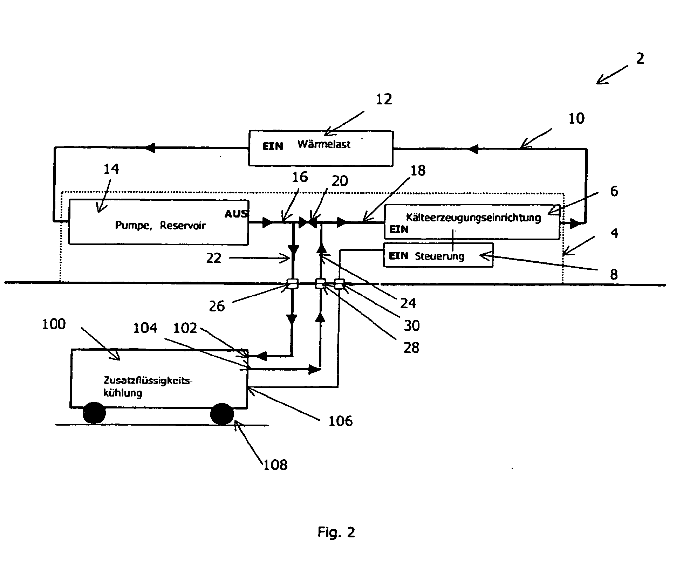

Die in Figur 2 gezeigte Anordnung entspricht der Anordnung gemäß Figur 1 mit der Ausnahme, dass die Steuereinrichtung 8 die Kälteerzeugungseinrichtung 6 des Luftfahrzeugflüssigkeitskühlsystems 4 nicht ausschaltet, sondern einschaltet oder eingeschaltet läßt. In diesem Fall kühlen sowohl die Kältequelle der Zusatzkühleinrichtung 100 als auch die Kälteerzeugungseinrichtung 6 des Luftfahrzeugflüssigkeitskühlsystems 4 das flüssige Kühlmittel. Folglich kann die Kältequelle der Zusatzkühleinrichtung 100 schwächer dimensioniert werden. Das erste Ventil 20 ist im Betrieb der in Figur 2 gezeigten Anordnung geschlossen.

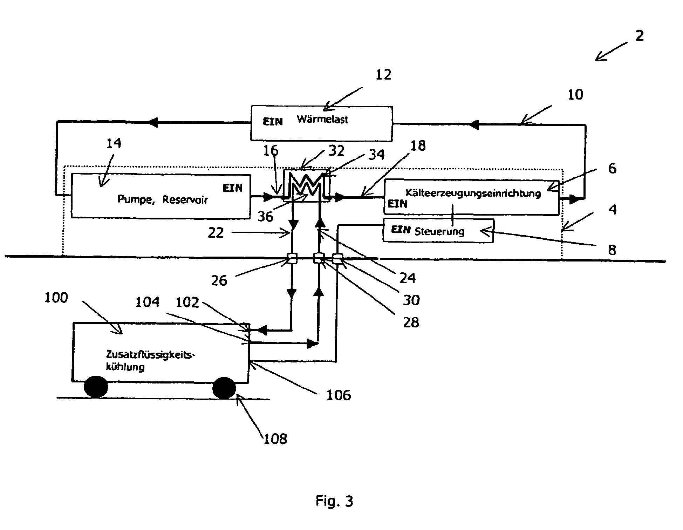

Die Anordnung gemäß Figur 3 weist einen Wärmetauscher 32 zwischen der zweiten Leitung 16 und der ersten Leitung 18 auf. Der Wärmetauscher 32 umfasst eine erste Fluidleitung 34 und eine zweite Fluidleitung 36. Der Wärmetauscher 32 ist so ausgebildet, dass Wärme bzw. Kälte von der ersten Fluidleitung 34 an die zweite Fluidleitung 36 und umgekehrt übertragen werden kann. Der Wärmetauscher 32 trennt das flüssige Kühlmittel des Luftfahrzeugflüssigkeitskühlsystems 4 vom flüssigen Kühlmittel der Zusatzkühleinrichtung 100. Es versteht sich, dass bei dieser Ausführungsform die Pumpe 14 des Luftfahrzeugflüssigkeitskühlsystems 4 eingeschaltet sein muss. Der Kühlmittelzuführanschluss 26 und der Kühlmittelabgabeanschluss 28 des Luftfahrzeugflüssigkeitskühlsystems 4 des Luftfahrzeugs 2 sind mit der zweiten Leitung 36 des Wärmetauschers 32 verbunden. Somit kann das von der Zusatzkühleinrichtung 100 gelieferte Kühlmittel im Wärmetauscher 32 Wärme von dem in der ersten Leitung 34 des Wärmetauschers 32 strömenden flüssigen Kühlmittel des Luftfahrzeugflüssigkeitskühlsystems 4 des Luftfahrzeugs 2 aufnehmen.

Bei dieser Anordnung kann die Steuereinrichtung 8 die Kälteerzeugungseinrichtung 6 des Luftfahrzeugflüssigkeitskühlsystems 4 wahlweise einschalten bzw. eingeschaltet lassen oder ausschalten. Ist die Kälteerzeugungseinrichtung 6 eingeschaltet, muss die Zusatzkühleinrichtung 100 weniger Kühlleistung aufbringen, so dass die Kältequelle der Zusatzkühleinrichtung 100 kleiner dimensioniert werden kann. Da das flüssige Kühlmittel der Zusatzkühleinrichtung 100 nicht mit dem flüssigen Kühlmittel des Luftfahrzeugflüssigkeitskühlsystems 4 vermischt wird, kann, wie zuvor beschrieben wurde, die Qualität des flüssigen Kühlmittels des Luftfahrzeugflüssigkeitskühlsystems 4 besser sichergestellt werden. Ferner können das Kühlmittel für die Zusatzkühleinrichtung 100 und das Kühlmittel für das Luftfahrzeugflüssigkeitskühlsystem 4 unabhängig voneinander und nahezu beliebig ausgewählt werden. Es ist denkbar, dass bei dieser Ausführungsform die Zusatzkühleinrichtung 100 ein gasförmiges Kühlmittel bereitstellt oder dass das flüssige Kühlmittel von der Zusatzkühleinrichtung 100 zumindest teilweise im Wärmetauscher 32 verdampft.

Die Zusatzkühleinrichtung 100 kann am Boden, nach einem Flug und vor einem Flug (zum Test) an das Luftfahrzeug 2 angeschlossen werden. Während des Taxing, des Abhebens, des Steigflugs, des Reiseflugs, des Anflugs und des Landens übernimmt das Luftfahrzeugflüssigkeitskühlsystem 4 die Aufgabe, die Wärmelast 12 zu kühlen. Die Steuereinrichtung 8 kann einen speziellen Modus aufweisen, mit Hilfe dessen die Kommunikation zwischen der Zusatzkühleinrichtung 100 und der Steuereinrichtung 8 gesteuert wird. Die Zusatzkühleinrichtung 100 kann auch zum Befüllen, Ablassen und/oder Nachfüllen von Kühlmittel des Luftfahrzeugflüssigkeitskühlsystems 4 ausgebildet sein. Bei den Ausführungsformen gemäß Figuren 1 und 2 muss sichergestellt sein, dass die Anschlussleitungen der Zusatzkühleinrichtung 100 sowie die Kühlmittelzufuhrleitung 24 als auch die Kühlmittelabgabeleitung 22 entlüftet sind. Das erste Ventil kann als Kugelventil, als Rücklaufventil oder als elektrisch gesteuertes Stellventil ausgebildet oder in die Pumpe 14 integriert sein. Die Zusatzkühleinrichtung 100 kann einen Dieselmotor mit einem integrierten Generator aufweisen. Die Zusatzkühleinrichtung 100 kann auch elektrisch betrieben werden.

Es ist ein Vorteil der Erfindung, dass das Luftfahrzeugflüssigkeitskühlsystem 4 ein niedrigeres Gewicht als entsprechende Systeme des Standes der Technik aufweist. Dadurch wird der Treibstoffverbrauch des Luftfahrzeugs 2 reduziert, was mit sinkenden Betriebskosten einhergeht. Ferner wird die Geräuschentwicklung der Kälteerzeugungseinrichtung 6 des Luftfahrzeugflüssigkeitskühlsystems 4 reduziert. Zusätzlich kann die Kälteerzeugungseinrichtung 6 kompakter aufgebaut werden, was dazu führt, dass zusätzlicher Raum für andere Komponenten des Luftfahrzeugs 2 bereitgestellt wird. Ferner erhöhen die erfindungsgemäße Zusatzkühleinrichtung 100 und das erfindungsgemäße Luftfahrzeugflüssigkeitskühlsystem 4 die Zuverlässigkeit der Kühlung der Wärmelast 12 am Boden, beispielsweise bei sehr hohen Umgebungstemperaturen.

## Patentansprüche

1. Zusatzkühleinrichtung (100), die dazu ausgebildet ist, außerhalb eines Luftfahrzeugs (2) betrieben zu werden und die umfasst:
- eine Kältequelle, die dazu eingerichtet ist, ein Kühlmittel auf eine gewünschte tiefe Temperatur abzukühlen,
- einen mit der Kältequelle verbundenen Zusatzkühleinrichtungsauslass (104), der mit einem Kühlmittelzuführanschluss (28) eines Luftfahrzeugflüssigkeitskühlsystems (4) verbindbar ist, um von der Kältequelle auf eine gewünschte tiefe Temperatur abgekühltes Kühlmittel an das Luftfahrzeugflüssigkeitskühlsystem (4) abzugeben, und
- einen mit der Kältequelle verbundenen Zusatzkühleinrichtungseinlass (102), der mit einem Kühlmittelabgabeanschluss (26) des Luftfahrzeugflüssigkeitskühlsystems (4) verbindbar ist, um durch Wärmeaufnahme von einer Wärmelast (12) in dem Luftfahrzeug (2) erwärmtes Kühlmittel aufzunehmen,
**dadurch gekennzeichnet, dass** die Zusatzkühteinrichtung (100) eine Zusatzkühleinrichtungsschnittstelle (106) umfasst, die dazu ein gerichtet ist, ein Signal von einer Steuereinrichtung (8) des Luftfahrzeugflüssigkeitskühlsystems (4) zu empfangen, das einen Kühlmittelbedarf und/oder eine Solltemperatur des an das Luftfahrzeugflüssigkeitskühlsystem (4) abzugebenden Kühlmittels anzeigt.

2. Zusatzkühleinrichtung (100) nach Anspruch 1,
**dadurch gekennzeichnet, dass** die Zusatzkühleinrichtung (100) dazu eingerichtet ist, mittels der Kältequelle auf eine gewünschte tiefe Temperatur abgekühltes Kühlmittel am Zusatzkühleinrichtungauslass (104) entsprechend dem von der Zusatzkühleinrichtungsschnittstelle (106) erhaltenen Signal an das Luftfahrzeugflüssigkeitskühlsystem (4) abzugeben.

3. Zusatzkühleinrichtung (100) nach Anspruch 1 oder 2,
**dadurch gekennzeichnet, dass** die Zusatzkühleinrichtung (100) Räder (108) aufweist, damit die Zusatzkühleinrichtung (100) bewegt werden kann, oder dass die Zusatzkühleinrichtung (100) als stationäre Einrichtung ausgebildet ist, die dazu eingerichtet ist, In einem Flughafenbereich untergebracht und mittels entsprechend langer Anschlussleitungen mit dem Luftfahrzeugflüssigkeitskühlsystem (4) verbunden zu werden.

4. Zusatzkühleinrichtung (100) nach einem der Ansprüche 1 bis 3,
**dadurch gekennzeichnet, dass** die Zusatzkühleinrichtung (100) eine Filtereinrichtung zum Filtern des Kühlmittels umfasst.

5. Zusatzkühleinrichtung (100) nach einem der Ansprüche 1 bis 4,
**dadurch gekennzeichnet, dass** die Zusatzkühleinrichtung (100) einen Dieselmotor mit einem integrierten Generator umfasst oder elektrisch betreibbar ist und/oder dazu eingerichtet ist, das Luftfahrzeugflüssigkeitskühlsystem (4) mit Kühlmittel zu befüllen und/oder Kühlmittel aus dem Luftfahrzeugflüssigkeitskühlsystem (4) abzulassen.

6. Luftfahrzeugflüssigkeitskühlsystem (4) mit:
- einer Kälteerzeugungseinrichtung (6), die dazu ausgebildet ist, ein in einem Kühlkreislauf zirkulierendes flüssiges Kühlmittel auf eine gewünschte tiefe Temperatur abzukühlen,
- einem Kühlmittelzuführanschluss (28), der mit dem Zusatzkühleinrichtungsauslass (104) einer Zusatzkühleinrichtung (100) nach einem der Ansprüche 1 bis 4 verbindbar ist, um von der Kältequelle der Zusatzkühleinrichtung (100) auf eine gewünschte tiefe Temperatur abgekühltes Kühlmittel aufzunehmen, und
- einem Kühlmittelabgabeanschluss (26), der mit dem Zusatzkühleinrichtungseinlass (102) der Zusatzkühleinrichtung (100) verbindbar ist, um durch Wärmeaufnahme von einer Wärmelast (12) in dem Luftfahrzeug (2) erwärmtes Kühlmittel an die Zusatzkühleinrichtung (100) abzugeben.

7. Luftfahrzeugflüssigkeitskühlsystem (4) nach Anspruch 6,
**dadurch gekennzeichnet, dass** das Luftfahrzeugflüssigkeitskühlsystem (4) eine Steuereinrichtung (8) umfasst, die dazu eingerichtet ist, über eine Luftfahrzeugkühlsysbemschnittstelle (30) ein Signal an die Zusatzkühleinrichtungsschnittstelle (106) der Zusatzkühleinrichtung (100) zu senden, das einen Kühlmittelbedarf und/oder eine Solltemperatur des an das Luftfahrzeugflüssigkeitskühlsystem (4) abzugebenden Kühlmittels anzeigt.

8. Luftfahrzeugflüsslgkeitskühlsystem (4) nach Anspruch 6 oder 7,
**gekennzeichnet durch** eine mit dem Kühlmittelzuführanschluss (28) verbundene Kühlmittelzuführleitung (24), in der ein Kühlmittelzuführanschlussventil angeordnet ist, sowie eine mit dem Kühlmittelabgabeanschluss (26) verbundene Kühlmittelabgabeleltung (22), in der ein Kühlmittelabgabeanschlussventil angeordnet ist.

9. Luftfahrzeugflüssigkeitskühlsystem (4) nach einem der Ansprüche 6 bis 8,
**dadurch gekennzeichnet, dass** die Kühlmittelzuführleitung (24) und die Kühlmittelabgabeleitung (22) in den mit der Kälteerzeugungseinrichtung (6) verbundenen Kühlkreislauf des Luftfahrzeugflüssigkeitskühlsystems (4) münden, wobei in dem Kühlkreislauf zwischen einer Mündungsstelle der Kühlmittelzuführleitung (24) und einer Mündungsstelle der Kühlmittelabgabeleitung (22) ein erstes Ventil (20) angeordnet ist.

10. Luftfahrzeugflüssigkeitskühlsystem (4) nach Anspruch 9,
**dadurch gekennzeichnet, dass** das erste Ventil (20) als Kugelventil, als Rücklaufventil oder als elektrisches Stellventil ausgebildet oder in eine in dem Kühlkreislauf angeordnete Fördereinrichtung integriert ist.

11. Luftfahrzeugflüssigkeitskühlsystem (4) nach Anspruch 6 oder 7,
**gekennzeichnet durch** einen Wärmetauscher (32), der eine erste Fluidleitung (34) sowie eine thermisch mit der ersten Fluidleitung (34) gekoppelte zweite Fluidleitung (36) umfasst, wobei die erste Fluidleitung (34) fluidleitend mit dem Kühlkreislauf des Luftfahrzeugflüssigkeitskühlsystems (4) verbunden ist und die zweite Fluidleitung (36) mit dem Kühlmittelzuführanschluss (28) sowie dem Kühlmittelabgabeanschluss (26) des Luftfahrzeugflüssigkeitskühlsystems (4) verbunden ist.

12. Luftfahrzeugflüssigkeitskühlsystem (4) nach einem der Ansprüche 6 bis 11,
**dadurch gekennzeichnet, dass** die Steuereinrichtung (8) des Luftfahrzeugflüssigkeitskühlsystems (4) dazu eingerichtet ist, die Kälteerzeugungseinrichtung (6), das erste Ventil (20), das Kühlmittelzuführanschlussventil und/oder das Kühlmittelabgabeanschlussventil zu steuern und/oder dass die Steuereinrichtung (8) des Luftfahrzeugflüssigkeitskühlsystems (4) dazu eingerichtet ist, in einem speziellen Modus die Kommunikation zwischen dem Luftfahrzeugflüssigkeitskühlsystem (4) und der Zusatzkühleinrichtung (100) zu steuern.

13. Verfahren zum Kühlen zumindest einer Wärmelast (12) an Bord eines Luftfahrzeugs (2), welches die Schritte umfasst:
- Verbinden einer Zusatzkühleinrichtung (100) nach einem der Ansprüche 1 bis 4 mit einem Luftfahrzeugflüssigkeitskühlsystem (4) nach einem der Ansprüche 5 bis 10 und
- Zuführen von mittels der Zusatzkühleinrichtung (100) gekühltem Kühlmittel zu dem Luftfahrzeugflüssigkeitskühlsystem (4).

14. Verfahren zum Kühlen zumindest einer Wärmelast (12) an Bord eines Luftfahrzeugs (2) nach Anspruch 13,
**dadurch gekennzeichnet, dass** die Zusatzkühleinrichtung (100) im Bodenbetrieb des Luftfahrzeugs (2), nach einem Flug und/oder vor einem Flug und/oder zur Unterstützung einer Flugzeugklimaanlage mit dem Luftfahrzeugflüssigkeitskühlsystem (4) verbunden wird und dem Luftfahrzeugflüssigkeitskühlsystem (4) gekühltes Kühlmittel zuführt, wohingegen die Wärmelast (12) während des Taxing, des Abhebens, des Steigflugs, des Reiseflugs, des Anflugs und des Landens von dem Luftfahrzeugflüssigkeitskühlsystem (4) gekühlt wird.

15. Verfahren zum Kühlen zumindest einer Wärmelast (12) an Bord eines Luftfahrzeugs (2) nach Anspruch 13 oder 14,
**dadurch gekennzeichnet, dass** in die Zusatzkühleinrichtung (100) und/oder in das Luftfahrzeugflüssigkeitskühlsystem (4) integrierte Leitungen und/oder Verbindungsleitungen zwischen der Zusatzkühleinrichtung (100) und dem Luftfahrzeugflüssigkeitskühlsystem (4) entlüftet werden.

## Claims

1. Auxiliary cooling device (100), which is configured to be operated outside of an aircraft (2) and comprises:
- a cold source, which is adapted to cool a coolant down to a desired low temperature,
- an auxiliary cooling device outlet (104), which is connected to the cold source and connectable to a coolant supply connection (28) of an aircraft liquid cooling system (4) in order to deliver coolant cooled to a desired low temperature by the cold source to the aircraft liquid cooling system (4),
and
- an auxiliary cooling device inlet (102), which is connected to the cold source and connectable to a coolant discharge connection (26) of the aircraft liquid cooling system (4) in order to receive coolant heated by heat absorption from a heat load (12) in the aircraft (2),
**characterized in that** the auxiliary cooling device (100) comprises an auxiliary cooling device interface (106), which is adapted to receive from a control device (8) of the aircraft liquid cooling system (4) a signal that indicates a coolant requirement and/or a setpoint temperature of the coolant to be delivered to the aircraft liquid cooling system (4).

2. Auxiliary cooling device (100) according to claim 1,
**characterized in that** the auxiliary cooling device (100) is adapted to deliver coolant cooled to a desired low temperature by means of the cold source at the auxiliary cooling device outlet (104) to the aircraft liquid cooling system (4) in accordance with the signal received by the auxiliary cooling device interface (106).

3. Auxiliary cooling device (100) according to claim 1 or 2,
**characterized in that** the auxiliary cooling device (100) has wheels (108) to allow the auxiliary cooling device (100) to be moved, or that the auxiliary cooling device (100) is formed as a stationary device that is adapted to be accommodated in an airport area and connected by means of suitably long connection lines to the aircraft liquid cooling system (4).

4. Auxiliary cooling device (100) according to one of claims 1 to 3,
**characterized in that** the auxiliary cooling device (100) comprises a filter device for filtering the coolant.

5. Auxiliary cooling device (100) according to one of claims 1 to 4,
**characterized in that** the auxiliary cooling device (100) comprises a diesel motor with an integrated generator or is operable electrically and/or is adapted to fill the aircraft liquid cooling system (4) with coolant and/or to drain coolant from the aircraft liquid cooling system (4).

6. Aircraft liquid cooling system (4) comprising:
- a refrigerating device (6), which is configured to cool a liquid coolant circulating in a cooling circuit down to a desired low temperature,
- a coolant supply connection (28), which is connectable to the auxiliary cooling device outlet (104) of an auxiliary cooling device (100) according to one of claims 1 to 4 in order to receive coolant cooled down to a desired low temperature by the cold source of the auxiliary cooling device (100), and
- a coolant discharge connection (26), which is connectable to the auxiliary cooling device inlet (102) of the auxiliary cooling device (100) in order to deliver coolant heated by heat absorption from a heat load (12) in the aircraft (2) to the auxiliary cooling device (100).

7. Aircraft liquid cooling system (4) according to claim 6,
**characterized in that** the aircraft liquid cooling system (4) comprises a control device (8), which is adapted to transmit via an aircraft cooling system interface (30) to the auxiliary cooling device interface (106) of the auxiliary cooling device (100) a signal that indicates a coolant requirement and/or a setpoint temperature of the coolant to be delivered to the aircraft liquid cooling system (4).

8. Aircraft liquid cooling system (4) according to claim 6 or 7,
**characterized by** a coolant supply line (24), which is connected to the coolant supply connection (28) and in which a coolant supply connection valve is arranged, as well as by a coolant discharge line (22), which is connected to the coolant discharge connection (26) and in which a coolant discharge connection valve is arranged.

9. Aircraft liquid cooling system (4) according to one of claims 6 to 8,
**characterized in that** the coolant supply line (24) and the coolant discharge line (22) open out into the cooling circuit of the aircraft liquid cooling system (4) which is connected to the refrigerating device (6), wherein a first valve (20) is arranged in the cooling circuit between a debouchment point of the coolant supply line (24) and a debouchment point of the coolant discharge line (22).

10. Aircraft liquid cooling system (4) according to claim 9,
**characterized in that** the first valve (20) is formed as a ball valve, as a return valve or as an electrical control valve or is integrated in a conveying device arranged in the cooling circuit.

11. Aircraft liquid cooling system (4) according to claim 6 or 7,
**characterized by** a heat exchanger (32), which comprises a first fluid line (34) as well as a second fluid line (36) thermally coupled to the first fluid line (34), wherein the first fluid line (34) is connected in a fluid-conveying manner to the cooling circuit of the aircraft liquid cooling system (4) and the second fluid line (36) is connected to the coolant supply connection (28) as well as to the coolant discharge connection (26) of the aircraft liquid cooling system (4).

12. Aircraft liquid cooling system (4) according to one of claims 6 to 11,
**characterized in that** the control device (8) of the aircraft liquid cooling system (4) is adapted to control the refrigerating device (6), the first valve (20), the coolant supply connection valve and/or the coolant discharge connection valve and/or that the control device (8) of the aircraft liquid cooling system (4) is adapted in a special mode to control the communication between the aircraft liquid cooling system (4) and the the auxiliary cooling system (100).

13. Method of cooling at least one heat load (12) on board an aircraft (2), comprising the steps:
- connecting an auxiliary cooling device (100) according to one of claims 1 to 4 to an aircraft liquid cooling system (4) according to one of claims 5 to 10 and
- supplying coolant cooled by means of the auxiliary cooling device (100) to the aircraft liquid cooling system (4).

14. Method of cooling at least one heat load (12) on board an aircraft (2) according to claim 13,
**characterized in that** the auxiliary cooling device (100) is connected to the aircraft liquid cooling system (4) during ground operation of the aircraft (2), after a flight and/or before a flight and/or for support of an aircraft air conditioning system and supplies cooled coolant to the aircraft liquid cooling system (4), whereas during taxiing, take-off, ascent, cruising, descent and landing the heat load (12) is cooled by the aircraft liquid cooling system (4).

15. Method of cooling at least one heat load (12) on board an aircraft (2) according to claim 13 or 14,
**characterized in that** lines integrated in the auxiliary cooling device (100) and/or in the aircraft liquid cooling system (4), and/or connection lines between the auxiliary cooling device (100) and the aircraft liquid cooling system (4) are vented.

## Revendications

1. Dispositif de refroidissement (100) supplémentaire conçu pour fonctionner à l'extérieur d'un aéronef et comprenant :
- une source de froid conçue pour refroidir un agent de refroidissement à une température basse souhaitée,
- une sortie (104) reliée à ladite source de froid, laquelle sortie peut être reliée à un raccordement d'alimentation en agent de refroidissement (28) d'un système de refroidissement par liquide d'aéronef (4) pour fournir à ce dernier l'agent de refroidissement refroidi par la source de froid à une température basse souhaitée et
- une entrée (102) reliée à ladite source de froid, laquelle entrée peut être reliée à un raccordement de distribution d'agent de refroidissement (26) dudit système de refroidissement par liquide d'aéronef (4) pour recevoir l'agent de refroidissement chauffé dans l'aéronef (2) par absorption de la chaleur provenant d'une charge thermique (12),
**caractérisé en ce que** le dispositif de refroidissement supplémentaire (100) comprend une interface (106) conçue pour recevoir un signal provenant d'un dispositif de commande (8) dudit système de refroidissement par liquide d'aéronef (4) signalant un besoin d'agent de refroidissement et/ou une température théorique de l'agent de refroidissement à délivrer au système de refroidissement par liquide d'aéronef (4).

2. Dispositif de refroidissement supplémentaire (100) selon la revendication 1, **caractérisé en ce que** le dispositif de refroidissement supplémentaire (100) est conçu pour délivrer, à sa sortie (104), un agent de refroidissement refroidi par la source de froid à une température basse souhaitée au système de refroidissement par liquide d'aéronef (4), conformément au signal reçu par ladite interface (106)

3. Dispositif de refroidissement supplémentaire (100) selon la revendication 1 ou 2,
**caractérisé en ce que** le dispositif de refroidissement supplémentaire (100) présente des roues (108) pour qu'il puisse être déplacé, ou que le dispositif de refroidissement supplémentaire (100) est réalisé sous forme de dispositif stationnaire conçu pour être placé dans une zone aéroportuaire et relié au système de refroidissement par liquide d'aéronef (4) au moyen de longues conduites de raccordement correspondantes.

4. Dispositif de refroidissement supplémentaire (100) selon l'une des revendications 1 à 3,
**caractérisé en ce que** le dispositif de refroidissement supplémentaire (100) comprend un dispositif à filtre pour filtrer l'agent de refroidissement.

5. Dispositif de refroidissement supplémentaire (100) selon l'une des revendications 1 à 4,
**caractérisé en ce que** le dispositif de refroidissement supplémentaire (100) comprend un moteur diesel à générateur intégré ou qu'il peut fonctionner électriquement et/ou est conçu pour remplir le système de refroidissement par liquide d'aéronef (4) avec un agent de refroidissement et/ou pour évacuer de l'agent de refroidissement du système de refroidissement par liquide d'aéronef (4).

6. Système de refroidissement par liquide d'aéronef (4) comportant:
- un dispositif producteur de froid (6) conçu pour refroidir à une température basse souhaitée un agent de refroidissement liquide circulant dans un circuit de refroidissement,
- un raccordement d'alimentation en agent de refroidissement (28) pouvant être relié à la sortie (104) d'un dispositif de refroidissement supplémentaire (100) selon l'une des revendications 1 à 4, pour recevoir un agent de refroidissement refroidi par la source de froid du dispositif de refroidissement supplémentaire (100) à une température basse souhaitée, et
- un raccordement de distribution d'agent de refroidissement (26) pouvant être relié à l'entrée (102) du dispositif de refroidissement supplémentaire (100) pour délivrer au dispositif de refroidissement supplémentaire (100) de l'agent de refroidissement chauffé dans l'aéronef (2) par absorption de la chaleur provenant d'une charge thermique (12).

7. Système de refroidissement par liquide d'aéronef (4) selon la revendication 6,
**caractérisé en ce que** le système de refroidissement par liquide d'aéronef (4) comporte un dispositif de commande (8) conçu pour émettre à l'interface (106) du dispositif de refroidissement supplémentaire (100) via une interface de système de refroidissement d'aéronef (30), lequel signal indique un besoin d'agent de refroidissement et/ou une température théorique de l'agent de refroidissement à délivrer au système de refroidissement par liquide d'aéronef (4).

8. Système de refroidissement par liquide d'aéronef (4) selon la revendication 6 ou 7,
**caractérisé par** une conduite d'alimentation en agent de refroidissement (24) reliée au raccordement d'alimentation en agent de refroidissement (28), dans laquelle est disposée une valve de raccordement d'alimentation en agent de refroidissement, ainsi que par une conduite de distribution d'agent de refroidissement (22) reliée au raccordement de distribution d'agent de refroidissement (26), dans laquelle est disposée une valve de raccordement de délivrance d'agent de refroidissement.

9. Système de refroidissement par liquide d'aéronef (4) selon l'une des revendications 6 à 8,
**caractérisé en ce que** lesdites conduite d'alimentation en agent de refroidissement (24) et conduite de distribution d'agent de refroidissement débouchent dans le circuit de refroidissement relié au dispositif producteur de froid (6), une première valve (20) étant placée dans le circuit de refroidissement entre un point d'embouchure de la conduite d'alimentation en agent de refroidissement (24) et un point d'embouchure de la conduite de distribution d'agent de refroidissement (22).

10. Système de refroidissement par liquide d'aéronef (4) selon la revendication 9, **caractérisé en ce que** la première valve (20) est réalisée sous forme de valve à bille, de valve anti-retour ou de servo-valve électrique, ou intégrée dans un dispositif d'acheminement placé dans le circuit de refroidissement.

11. Système de refroidissement par liquide d'aéronef (4) selon la revendication 6 ou 7,
**caractérisé par** un échangeur de chaleur (32) qui comporte une première conduite de fluide (34) et une deuxième conduite de fluide thermiquement couplée à ladite première conduite de fluide (34), cette première conduite de fluide (34) étant reliée de manière fluidique au circuit de refroidissement du système de refroidissement par liquide d'aéronef (4) et la deuxième conduite de fluide (36) étant reliée au raccordement d'alimentation en agent de refroidissement (28) et au raccordement de distribution d'agent de refroidissement (26) du système de refroidissement par liquide d'aéronef (4).

12. Système de refroidissement par liquide d'aéronef (4) selon l'une des revendications 6 à 11,
**caractérisé en ce que** le dispositif de commande (8) du système de refroidissement par liquide d'aéronef (4) est conçu pour commander le dispositif producteur de froid (6), la première valve (20), la valve de raccordement d'alimentation en agent de refroidissement et/ou la valve de raccordement de distribution d'agent de refroidissement, et/ou que le dispositif de commande (8) du système de refroidissement par liquide d'aéronef (4) est conçu pour commander, dans un mode spécial, la communication entre le système de refroidissement par liquide d'aéronef (4) et le dispositif de refroidissement supplémentaire (100).

13. Procédé pour refroidir au moins une charge thermique (12) à bord d'un aéronef (2), lequel procédé comprend pour étapes :
- le raccordement d'un dispositif de refroidissement supplémentaire (100) selon l'une des revendications 1 à 4 à un système de refroidissement par liquide d'aéronef (4) selon l'une des revendications 5 à 10 et
- l'acheminement, vers le système de refroidissement par liquide d'aéronef (4), d'agent de refroidissement refroidi au moyen du dispositif de refroidissement supplémentaire (100).

14. Procédé pour refroidir au moins une charge thermique (12) à bord d'un aéronef (2), selon la revendication 13,
**caractérisé en ce que** le dispositif de refroidissement supplémentaire (100) est, en phase de service au sol, après un vol et/ou avant un vol et/ou pour assister une installation de climatisation d'avion, relié au système de refroidissement par liquide d'aéronef (4) et qu'il alimente en agent de refroidissement refroidi le système de refroidissement par liquide d'aéronef (4), tandis que la charge thermique (12) est refroidie par le système de refroidissement par liquide d'aéronef (4) pendant le taxing, le décollage, l'ascension, le vol en altitude de croisière, la descente et l'atterrissage.

15. Procédé pour refroidir au moins une charge thermique (12) à bord d'un aéronef (2) selon la revendication 13 ou 14,
**caractérisé en ce que** des conduites intégrées dans le dispositif de refroidissement supplémentaire (100) et/ou dans le système de refroidissement par liquide d'aéronef (4), et/ou des conduites assurant la liaison entre le dispositif de refroidissement supplémentaire (100) et le système de refroidissement par liquide d'aéronef (4) sont purgées de leur air.
